# EUROPÄISCHE PATENTSCHRIFT

(11) **EP 3 178 068 B1**
(45) Veröffentlichungstag und Bekanntmachung des Hinweises auf die Patenterteilung: **19.09.2018**
(21) Anmeldenummer: 14780790.3
(22) Anmeldetag: 23.09.2014
(51) Int. Cl.: G06T 15/08, G06T 15/50

(54) **VERFAHREN, VISUALISIERUNGSVORRICHTUNG UND COMPUTERPROGRAMMPRODUKT ZUR VISUALISIERUNG EINES DREIDIMENSIONALEN OBJEKTS**
METHOD, VISUALIZATION DEVICE, AND COMPUTER PROGRAM PRODUCT FOR VISUALIZING A THREE-DIMENSIONAL OBJECT
PROCÉDÉ, DISPOSITIFS DE VISUALISATION ET PRODUIT-PROGRAMME D'ORDINATEUR POUR LA VISUALISATION D'UN OBJET TRIDIMENSIONNEL

(43) Veröffentlichungstag der Anmeldung: 14.06.2017
(60) Teilanmeldung: 18181716.4
(73) Patentinhaber: Siemens Healthcare GmbH, 91052 Erlangen (DE)
(72) Erfinder: ENGEL, Klaus, 90491 Nürnberg (DE)
(86) Internationale Anmeldenummer: PCT/EP2014/070231
(87) Internationale Veröffentlichungsnummer: WO 2016/045701

(56) Entgegenhaltungen:
- THOMAS KROES ET AL: "Exposure Render: An Interactive Photo-Realistic Volume Rendering Framework", PLOS ONE, Bd. 7, Nr. 7, 2. Juli 2012 (2012-07-02), Seite e38586, XP055188757, DOI: 10.1371/journal.pone.0038586 in der Anmeldung erwähnt
- John Pawasauskas: "Volume Rendering With Ray Casting", , 18. Februar 1997 (1997-02-18), Seiten 1-14, XP055190751, Gefunden im Internet: URL:http://web.cs.wpi.edu/~matt/courses/cs 563/talks/powwie/p1/ray-cast.htm [gefunden am 2015-05-21]
- Optische Modelle ET AL: "Optische Modelle, Hauptseminar "Interaktives Volumenrendering"", , 31. Dezember 2011 (2011-12-31), Seiten 1-23, XP055190803, Gefunden im Internet: URL:https://www.vis.uni-stuttgart.de/uploa ds/tx_visteaching/Optische_Modelle_-_Danie l_Klier.pdf [gefunden am 2015-05-21]

## Beschreibung

Die Erfindung betrifft das technische Gebiet des Volume Rendering, d.h. einer Visualisierung von inhomogenen dreidimensionalen Objekten durch Bildsynthese. Derartige Objekte können insbesondere reale Körper oder virtuell modellierte Objekte sein. Die Visualisierung von dreidimensionalen Objekten hat eine Vielzahl von Anwendungsbereichen, insbesondere in der Medizin, in der Geophysik, in der Materialuntersuchung, auf dem Feld der virtuellen Realität und/oder bei Computerspielen.

Beim Volume Rendering wird auch das innere Volumen, d.h. nicht nur eine Oberfläche eines inhomogenen Objekts visualisiert, so dass auch Transparenzeffekte und/oder innere Strukturen auf realistische Weise wiedergegeben werden können. Das dreidimensionale Objekt wird hierbei durch Volumendaten in dreidimensionaler Auflösung repräsentiert

Ein bekanntes Verfahren für das Volume Rendering ist das sog. Ray-Casting, bei dem der Verlauf von imaginären Strahlen, im Folgenden als Sehstrahlen bezeichnet, simuliert wird, die vom Auge eines imaginären Betrachters oder einem imaginären Detektor ausgehen und durch das zu visualisierende Objekt verlaufen. Entlang der Sehstrahlen werden Beleuchtungswerte für Punkte innerhalb des Objekts ermittelt. Aus den für die Sehstrahlen ermittelten Beleuchtungswerten wird schließlich ein visualisiertes zweidimensionales Bild zusammengesetzt.

Eine realistische Visualisierung erfordert eine möglichst umfassende Berücksichtigung von Effekten der globalen Illumination, wie z.B. Umgebungsverdeckung, Schatten, Transluzenz, sog. Color Bleeding, Oberflächenschattierung, komplexe Kameraeffekte und/oder Beleuchtung durch beliebige Umgebungslichtverhältnisse. Die Umgebungsverdeckung wird hierbei häufig auch als Ambient Occlusion bezeichnet. Derartige Beleuchtungseffekte tragen insbesondere beim Volume Rendering wesentlich zur Tiefen- und Gestaltwahrnehmung und damit zu einem besseren Bildverständnis bei.

Bekannte Volume Rendering-Systeme berücksichtigen zwar häufig lokale Illuminationseffekte, können aber nicht alle globalen Illuminationseffekte in realistischer Weise einbeziehen.

Aus der Druckschrift "Exposure Render: An Interactive Photo-Realistic Volume Rendering Framework" von Thomas Kroes et al., PLoS ONE, Volume 7, Issue 7, vom Juli 2012 ist ein Volume Rendering-Verfahren bekannt, das zur Verfolgung von Sehstrahlen eine Monte-Carlo-Simulation zusammen mit sog. Woodcock-Tracking verwendet. Zur Berechnung realistischer Schattierungseffekte sind jedoch zusätzlich zu einem jeweiligen Sehstrahl weitere Strahlen innerhalb des Objektvolumens zu verfolgen, was einen erheblichen Rechenaufwand bedingt. Darüber hinaus ist ein sog. Importance Sampling erforderlich, was die statistischen Eigenschaften des Monte-Carlo-Verfahrens beeinflusst.

Es ist Aufgabe der vorliegenden Erfindung, ein Verfahren, eine Visualisierungsvorrichtung sowie ein Computerprogrammprodukt zur Visualisierung eines dreidimensionalen Objekts anzugeben, das eine effiziente Einbeziehung globaler Illuminationseffekte erlaubt.

Gelöst wird diese Aufgabe durch ein Verfahren mit den Merkmalen des Patentanspruchs 1, durch eine Visualisierungsvorrichtung mit den Merkmalen des Patentanspruchs 13 sowie durch ein Computerprogrammprodukt mit den Merkmalen des Patentanspruchs 14.

Zur Visualisierung eines durch Volumendaten repräsentierten, inhomogenen dreidimensionalen Objekts werden für ein jeweiliges Visualisierungspixel eine Vielzahl von dem Visualisierungspixel zugeordneten Sehstrahlen simuliert. Die Volumendaten geben hierbei eine Dichte des abzubildenden Objekts in einem Objektvolumen an. Die Dichte kann dabei insbesondere eine physikalische Dichte, eine optische Dichte, ein Brechungsindex und/oder ein Helligkeits-, Farb-, Transparenz-und/oder Opazitätswert sein und in skalarer, vektorieller oder tensorieller Form gegeben sein. Die Visualisierungspixel können insbesondere virtuell auf einer Abbildungsebene oder einer gekrümmten Abbildungsfläche angeordnet sein. Erfindungsgemäß wird für einen jeweiligen Sehstrahl, der in das Objektvolumen eindringt i) abhängig von der Dichte entlang des Sehstrahls eine Streuposition bestimmt, ii) abhängig von einem Zufallsprozess eine Streurichtung ausgewählt und iii) der Sehstrahl an der Streuposition in die ausgewählte Streurichtung gestreut. Der Zufallsprozess kann hierbei z.B. auf einem Pseudo- oder Quasizufallszahlengenerator basieren. Die Schritte i) bis iii) werden wiederholt, bis der Sehstrahl im Objektvolumen absorbiert wird oder aus dem Objektvolumen austritt, wobei der austretende Sehstrahl auf eine Beleuchtungsquelle trifft und abhängig von einem Helligkeits- und/oder Farbwert der Beleuchtungsquelle ein Beleuchtungsbeitrag des Sehstrahls zum jeweiligen Visualisierungspixel ermittelt wird. Über die jeweiligen Beleuchtungsbeiträge der Vielzahl von Sehstrahlen wird statistisch gemittelt, um einen Helligkeits- und/oder Farbwert für das zugeordnete Visualisierungspixel zu ermitteln.

Die Erfindung erlaubt es, komplexe globale Illuminationseffekte auf effiziente Weise zu berücksichtigen. Aufgrund der Streuung von Sehstrahlen in eine zufallsabhängig ausgewählte Streurichtung bis zur Absorption oder dem Auftreffen auf eine Beleuchtungsquelle können aufwändig zu berechnende kaskadierte Verzweigungen von Sehstrahlen oder Beleuchtungsstrahlen vermieden werden und trotzdem komplexe Lichtwege innerhalb des Objektvolumens berücksichtigt werden. Vorteilhafte Ausführungsformen und Weiterbildungen der Erfindung sind in den abhängigen Ansprüchen angegeben.

Nach der Erfindung ist als Beleuchtungsquelle ein das Objektvolumen umgebendes Umgebungsbild vorgesehen. Dabei können ein Auftreffpunkt des austretenden Sehstrahls auf das Umgebungsbild und der Beleuchtungsbeitrag des Sehstrahls abhängig von einem Helligkeits- und/oder Farbwert am Auftreffpunkt des Umgebungsbildes ermittelt werden. Ein solches Umgebungsbild wird häufig auch als Light Probe oder Light Map bezeichnet.

Insofern ein solches Umgebungsbild das Objektvolumen ganz oder teilweise umgibt, kann zumindest für einen erheblichen Anteil der austretenden Sehstrahlen erwartet werden, dass sie auf einen Bildpunkt des Umgebungsbildes treffen und so einen Beleuchtungsbeitrag erhalten. Auf diese Weise kann vermieden werden, dass ein großer Anteil der Sehstrahlen gewissermaßen verschwendet wird, d.h. verfolgt wird, ohne einen Beleuchtungsbeitrag zu liefern.

Mittels eines derartigen Umgebungsbildes kann das Objekt so visualisiert werden, als ob es sich in einer durch das Umgebungsbild abgebildeten Umgebung befände und der hiervon induzierten Beleuchtung in realistischer Weise ausgesetzt wäre.

Gemäß der Erfindung sind mehrere das Objektvolumen umgebende Umgebungsbilder als Beleuchtungsquellen vorgesehen. Hierbei kann dem Sehstrahl ein Streutyp zugeordnet werden und abhängig vom Streutyp des austretenden Sehstrahls mindestens eines der Umgebungsbilder ausgewählt werden. Der Beleuchtungsbeitrag des Sehstrahls kann dann spezifisch anhand des mindestens einen ausgewählten Umgebungsbildes ermittelt werden.

Der Streutyp kann insbesondere reflexiv oder transmissiv sein. Daneben kann noch ein Streutyp "ungestreut" für nicht gestreute Sehstrahlen vorgesehen sein. Ein reflexiver Streutyp kann vorzugsweise einer stark anisotropen Streuung entsprechend einer höchstens leicht diffusen Spiegelung an einer Oberfläche zugeordnet werden, während ein transmissiver Streutyp einer Streuung mit demgegenüber geringer Anisotropie zugeordnet werden kann. Vorzugsweise kann bei einem reflexiven Streutyp ein höchstens leicht unscharfes Umgebungsbild und bei einem transmissiven Streutyp ein demgegenüber stark verwaschenes Umgebungsbild ausgewählt werden. Insbesondere kann aus einem ersten der Umgebungsbilder mindestens ein zweites der Umgebungsbilder durch eine für einen Streutyp spezifische Filterung erzeugt werden. So kann ein erstes, ungefiltertes Umgebungsbild bei ungestreuten Sehstrahlen, ein daraus mittels eines Unschärfefilters leicht verwischtes, zweites Umgebungsbild bei reflexivem Streutyp sowie ein demgegenüber stark verwischtes oder diffuses Umgebungsbild bei transmissivem Streutyp ausgewählt werden.

Auf diese Weise können spezifische Eigenschaften von Streuungen, wie insbesondere deren Anisotropie, effektiv durch entsprechend gefilterte Umgebungsbilder nachgebildet oder implementiert werden.

Gemäß einer vorteilhaften Weiterbildung der Erfindung kann der Beleuchtungsbeitrag des Sehstrahls abhängig von einem Helligkeits- und/oder Farbwert eines ungestreut von einer Beleuchtungsquelle zur Streuposition verlaufenden Beleuchtungsstrahls modifiziert werden. Dies erlaubt eine effektive Berücksichtigung spezifischer Lichteinflüsse der Beleuchtungsquelle unter Vermeidung einer aufwändigen Strahlverfolgung.

Nach einer weiteren Weiterbildung der Erfindung kann mindestens eine, vorzugsweise flächenhafte Lichtquelle als Beleuchtungsquelle vorgesehen sein. Vorteilhafterweise kann hierbei die Auswahl der Streurichtung auf Streurichtungen in Richtung auf die mindestens eine Lichtquelle beschränkt werden. Insoweit häufig nicht erwartet werden kann, dass ein in zufälliger Richtung aus dem Objektvolumen austretender Sehstrahl die Lichtquelle trifft, kann durch die Beschränkung der möglichen Streurichtungen der Anteil der gewissermaßen verschwendeten Sehstrahlen verringert werden.

Insbesondere kann vorgesehen sein, dass die Beschränkung der Streurichtung mit einer vorgegebenen Wahrscheinlichkeit erfolgt, und dass, falls die Beschränkung nicht erfolgt, ein diffuser Beleuchtungsbeitrag in den Beleuchtungsbeitrag des austretenden Sehstrahls eingeht.

Nach einer Ausführungsform der Erfindung kann der Beleuchtungsbeitrag des Sehstrahls durch die Dichte an der Streuposition beeinflusst werden.

Vorzugsweise kann eine Transferfunktion vorgesehen sein, die einen jeweiligen Wert der Dichte auf einen Helligkeits-, Farb-, Transparenz- und/oder Opazitätswert abbildet. Auf diese Weise können innere Strukturen des Objekts, die durch unterschiedliche Dichte oder einen charakteristischen Dichteverlauf gekennzeichnet sind, in vorgebbarer Weise durch Farben, Helligkeit, Transparenz und/oder Opazität visualisiert werden.

Insbesondere kann ein vor der Streuung vorliegender Farbwert des Beleuchtungsbeitrags des Sehstrahls mit einem der Dichte zugeordneten Farbwert verknüpft, z.B. multipliziert werden und der resultierende Farbwert in den Beleuchtungsbeitrag des Sehstrahls eingesetzt werden.

Weiterhin kann ein Gradient der Dichte oder ein allgemeiner Dichteverlauf an der Streuposition ermittelt werden und die Streurichtung abhängig vom Gradienten ausgewählt werden. Die Gradientenberechnung kann ganz oder teilweise vorab erfolgen oder alternativ oder zusätzlich durch die Streuung des Sehstrahls ausgelöst werden.

Insbesondere kann ein Betrag des Gradienten bestimmt werden und dem Sehstrahl mit einer von dem Betrag abhängigen Wahrscheinlichkeit ein reflektiver und/oder refraktiver Streutyp zugeordnet werden. Eine Richtung des Gradienten kann dann als Oberflächennormale bestimmt werden und bei der Auswahl der Streurichtung können bezüglich der Oberflächenflächennormale reflektierte und/oder gebrochene Streurichtungen bevorzugt werden.

Nach einer vorteilhaften Ausführungsform der Erfindung kann die Streuposition mittels Woodcock-Tracking ermittelt werden. Vorzugsweise kann hierbei eine Wahrscheinlichkeit für die Streuung des Sehstrahls mit der Länge der vom Sehstrahl im Objektvolumen zurückgelegten Strecke steigen.

Gemäß einer weiteren Ausführungsform kann eine Anzahl der erfolgten Streuungen des Sehstrahls ermittelt, z.B. hochgezählt werden und die Absorption des Sehstrahls im Objektvolumen abhängig von dieser Anzahl erfolgen. Insbesondere kann für die Streuungen eine Maximalanzahl vorgegeben sein, nach deren Überschreitung der Sehstrahl als absorbiert gilt.

Nach einer weiteren Ausführungsform kann ein jeweiliger einem Visualisierungspixel zugeordneter Sehstrahl vom Visualisierungspixel auf eine zufällig ausgewählte Position auf einer virtuellen Linse gerichtet werden. Der Sehstrahl kann dann an der ausgewählten Position gemäß einer Brechkraft der virtuellen Linse gebrochen werden und der gebrochene Sehstrahl weiterverfolgt werden. Auf diese Weise kann eine virtuelle Kamera mit optischen Abbildungseffekten wie Tiefen- und/oder Bewegungsunschärfe simuliert werden, wodurch der Realitätseindruck verstärkt werden kann.

Ausführungsbeispiele der Erfindung werden nachfolgend anhand der Zeichnung näher erläutert.

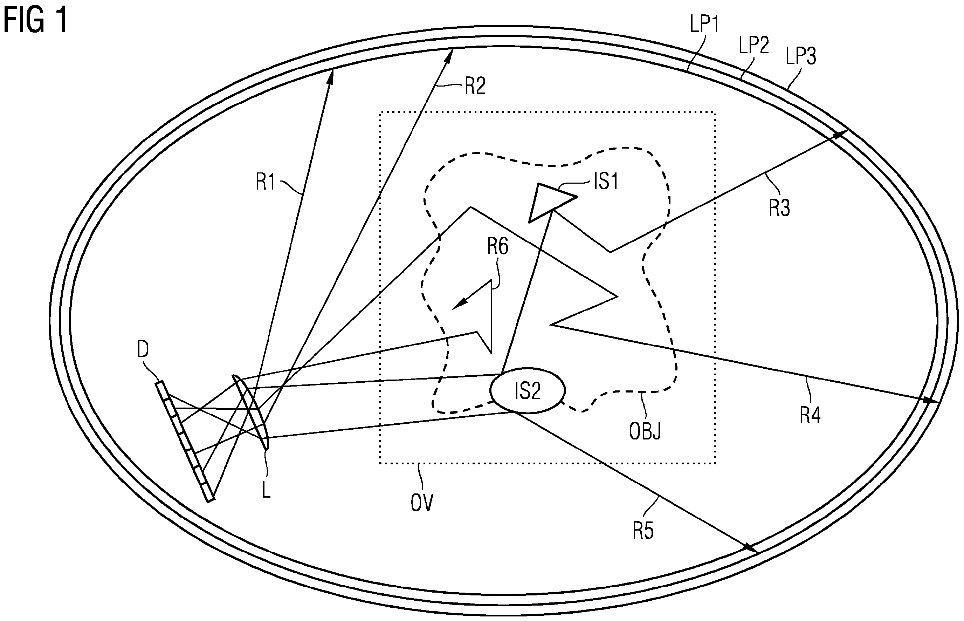

Die Figuren 1 bis 3 zeigen jeweils in schematischer Darstellung ein Ausführungsbeispiel mit simuliertem Strahlenverlauf zur Visualisierung eines dreidimensionalen Objekts.

Die Figuren 1-3 veranschaulichen jeweils eine Visualisierung eines dreidimensionalen Objektes OBJ. Dieses kann z.B. ein anhand von Tomographiedaten virtuell modelliertes Körperteil sein. Die in den Figuren 1-3 veranschaulichten Strukturen werden vorzugsweise als virtuelle Strukturen durch einen Computer simuliert. Ein wesentlicher Teil der hierfür erforderlichen Berechnungen kann vorzugsweise auf eine Grafikkarte des Computers ausgelagert werden und dort in massiv paralleler Weise durchgeführt werden. Das Objekt OBJ ist in einem dreidimensionalen Objektvolumen OV enthalten, das durch ein punktiertes Rechteck angedeutet ist. Das Objekt OBJ wird innerhalb des Objektvolumens OV durch Volumendaten repräsentiert, die eine Dichte des zu visualisierenden Objekts OBJ in dreidimensionaler bzw. räumlicher Auflösung angeben. Die Dichte kann hierbei insbesondere eine physikalische Dichte, eine optische Dichte, einen Brechungsindex und/oder eine Helligkeit, Farbe, Transparenz und/oder Opazität des Objektes OBJ in dreidimensionaler Auflösung angeben.

Ein virtueller Detektor D dient als Abbildungsebene, auf die das visualisierte Objekt OBJ virtuell projiziert wird. Der Detektor D umfasst eine Vielzahl von virtuell flächenhaft angeordneten Visualisierungspixeln. Vor dem Detektor D ist eine virtuelle Linse L angeordnet, die zusammen mit dem Detektor D eine virtuelle Kamera bildet. Durch die Anordnung von Detektor D und der Linse L können optische Abbildungseffekte wie Tiefen- und/oder Bewegungsunschärfe simuliert werden.

Das Objekt OBJ weist als beispielhafte innere Strukturen eine implizite erste Oberfläche IS1 sowie eine implizite zweite Oberfläche IS2 auf. Als implizite Oberflächen können innere oder äußere Bereiche des Objektes OBJ aufgefasst oder identifiziert werden, bei denen ein Dichteverlauf gewissermaßen einen Sprung aufweist, d.h. bei denen ein Betrag eines Gradienten der Dichte lokal sehr groß wird. Dies ist z.B. beim Übergang von Muskelgewebe zu Knochengewebe der Fall. Der entsprechende Übergang kann dann als Knochenoberfläche identifiziert werden. Einer auf diese Weise identifizierten Oberfläche, hier IS1 und IS2, können vorzugsweise reflektierende Eigenschaften zugeordnet werden.

Von einem jeweiligen Visualisierungspixel des Detektors D geht eine Vielzahl von simulierten Sehstrahlen aus. Für die vorliegenden Ausführungsbeispiele sind in den Figuren 1-3 beispielhafte Sehstrahlen R1,...,R6 angedeutet. Ein von einem jeweiligen Visualisierungspixel des Detektors D ausgehender Sehstrahl R1,...,R6 wird vorzugsweise auf eine zufällig ausgewählte Position auf der virtuellen Linse L gerichtet und an der ausgewählten Position gemäß einer Brechkraft der Linse L nach dem physikalischen Brechungsgesetz gebrochen. Der gebrochene Sehstrahl R1,...,R6 wird dann weiterverfolgt. Zur Erzeugung eines einem Benutzer zu präsentierenden Bildes des zu visualisierenden Objektes OBJ wird für einen jeweiligen Visualisierungspixel des Detektors D eine Vielzahl von Sehstrahlen simuliert, d.h. berechnet. Über die Vielzahl von Sehstrahlen wird dann visualisierungspixelweise statistisch gemittelt. Während im Laufe der Visualisierung weitere Sehstrahlen berechnet werden, verbessert sich eine Qualität des generierten Bildes sukzessive, d.h. ein statistisch bedingtes Bildrauschen verringert sich im Laufe der Simulation.

Jedem von einem Visualisierungspixel ausgehenden Sehstrahl wird ein Beleuchtungsbeitrag zugeordnet, der vorzugsweise einen Farbwert enthält. Der Farbwert wird anfänglich mit der Farbe Weiß initialisiert. Für die von der Linse L gebrochenen Sehstrahlen wird jeweils ermittelt, ob sie in das Objektvolumen OV eindringen oder nicht. In den vorliegenden Ausführungsbeispielen dringt der Sehstrahl R1 nicht in das Objektvolumen OV ein, während die anderen Sehstrahlen R2,...,R6 in das Objektvolumen OV eindringen. Für die in das Objektvolumen OV eindringenden Sehstrahlen R2,...,R6 wird jeweils eine Streuposition innerhalb des Objektvolumens OV mittels sogenanntem Woodcock-Tracking ermittelt. Beim Woodcock-Tracking steigt eine Streuwahrscheinlichkeit abhängig von der vorzugsweise interpolierten Dichte des Objekts OBJ entlang des jeweiligen Sehstrahls mit der Länge des im Objektvolumen OV zurückgelegten Weges. An der ermittelten Streuposition wird eine Streuung des jeweiligen Sehstrahls simuliert. Die Streuung ändert die Richtung des Sehstrahls, was in den Figuren 1-3 durch entsprechende Knicke an der jeweiligen Streuposition angedeutet ist. Insbesondere wird ein jeweiliger Sehstrahl unverzweigt gestreut. Auf diese Weise können aufwändig zu berechnende kaskadierte Verzweigungen von Sehstrahlen oder verzweigte Bäume von Sehstrahlen vermieden werden.

Die Streurichtung wird mittels eines Zufallsprozesses ausgewählt. Hierbei wird vorzugsweise eine Wahrscheinlichkeits-Dichtefunktion, häufig auch mit PDF abgekürzt, verwendet, die für eine jeweilige Streuposition angibt, mit welcher Wahrscheinlichkeit der Sehstrahl in eine jeweilige Streurichtung gestreut wird. Eine derartige Wahrscheinlichkeits-Dichtefunktion wird häufig auch als Phasenfunktion bezeichnet. Die Phasenfunktion kann aus lokalen Materialeigenschaften des Objekts OBJ abgeleitet werden, zum Beispiel anhand einer aus Tomographiedaten abgeleiteten lokalen Röntgenabschwächung oder Absorption gemäß der sogenannten "Hounsfield-Skala". Die lokalen Materialeigenschaften werden vorzugsweise als Komponente der Dichte in den Volumendaten des Objekts OBJ kodiert. Vorzugsweise werden die Volumendaten derart kodiert, dass die Dichte und die daraus abgeleiteten Daten an jeder Position des Objektvolumens OV und insbesondere entlang der Sehstrahlen und ihrer Streupositionen effizient interpoliert werden können.

Eine lokale Farbe an der Streuposition kann durch Anwendung einer Transfer-Funktion auf die vorzugsweise interpolierte Dichte oder deren Komponenten abgeleitet werden. Die Transfer-Funktion kann beispielsweise höheren Dichten eine dunklere, gesättigtere und/oder andere Farbe zuordnen als geringeren Dichten. Die an der Streuposition vorliegende Farbe wird mit der dem jeweiligen Sehstrahl zugeordneten Farbe kombiniert, z.B. multipliziert, um eine Wechselwirkung zwischen Licht und dem Objekt OBJ an der Streuposition zu modellieren.

Der in die zufallsbasierte Streurichtung gestreute Sehstrahl R3,...,R6 wird mittels Woodcock-Tracking weiterverfolgt, um so die nächste Streuposition zu bestimmen, wo die gleichen Operationen wie bei der vorhergehenden Streuposition angewandt werden. Dieser Prozess wird wiederholt, bis der jeweilige Sehstrahl im Objektvolumen OV absorbiert wird oder das Objektvolumen OV verlässt. Die Absorption kann dabei modelliert werden, indem eine maximale Anzahl an Streuvorgängen vorgegeben wird, bei deren Überschreitung der jeweilige Sehstrahl als absorbiert gilt, oder indem eine Wahrscheinlichkeits-Dichtefunktion für die Extinktion eines jeweiligen Sehstrahls basierend auf der Anzahl der Streuereignisse benutzt wird. Eine derartige Kombination von Woodcock-Tracking mit zufallsbasierter Streuung wird häufig auch als Monte-Carlo-Rendering bezeichnet.

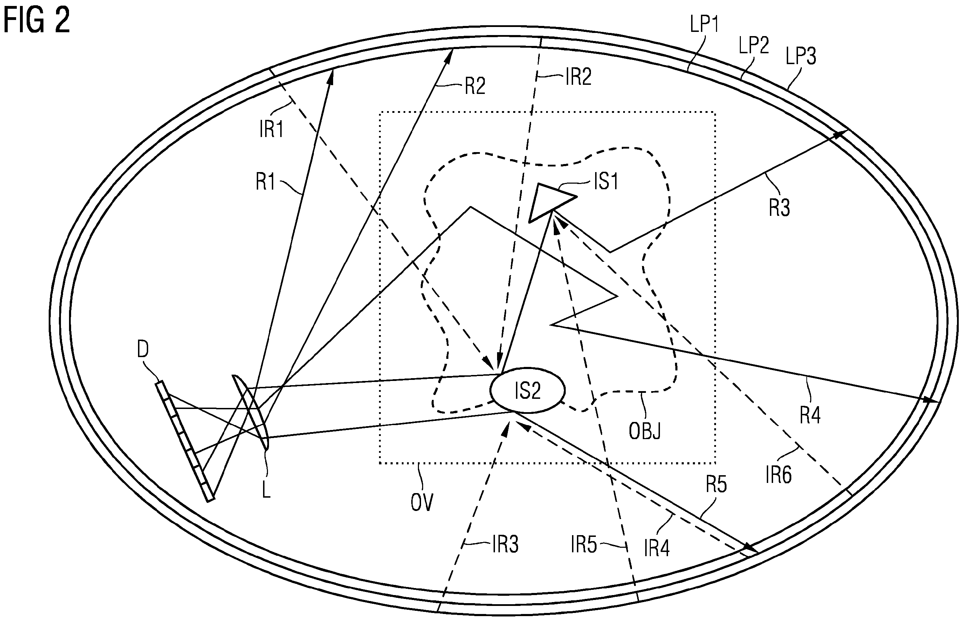

In den anhand von Figur 1 und Figur 2 veranschaulichten Ausführungsbeispielen sind das Objektvolumen OV umgebende Umgebungsbilder LP1, LP2 und LP3 als Beleuchtungsquellen vorgesehen. Derartige Umgebungsbilder werden häufig auch als "Light Probe" oder "Light Map" bezeichnet. Vorzugsweise umgeben die Umgebungsbilder LP1, LP2 und LP3 das Objektvolumen OV möglichst vollständig, so dass möglichst jeder aus dem Objektvolumen OV austretende Sehstrahl auf eines der Umgebungsbilder LP1, LP2 oder LP3 trifft. Die Umgebungsbilder LP1, LP2 oder LP3 sind jeweils so angeordnet, bzw. projiziert, dass sie diejenige Sicht abbilden, wie sie ein im Objektvolumen OV befindlicher Betrachter von der abgebildeten Umgebung haben würde.

Für die durch die Figuren 1 und 2 veranschaulichten Ausführungsbeispiele sei angenommen, dass das Umgebungsbild LP1 ein ungefiltertes Umgebungsbild, z.B. ein Rundumbild eines Straßenzuges ist. Das Umgebungsbild LP2 sei ein reflexives Umgebungsbild, das durch Anwendung eines leichten Unschärfefilters aus dem Umgebungsbild LP1 erzeugt wird. Das Umgebungsbild LP2 sei also eine leicht verwischte Version des Umgebungsbildes LP1. Daneben sei das Umgebungsbild LP3 ein diffuses Umgebungsbild, das durch Anwendung eines starken Unschärfefilters aus dem Umgebungsbild LP1 erzeugt wird. Das Umgebungsbild LP3 sei also eine stark verwischte oder fast diffuse Version des Umgebungsbildes LP1. Ein solches, nahezu diffuses, Umgebungsbild LP3 wird häufig auch als "Irradiance Light Map" bezeichnet.

Mittels des ungefilterten Umgebungsbildes LP1 wird der Beleuchtungsbeitrag eines ungestreuten Sehstrahls ermittelt. Entsprechend wird anhand des reflexiven Umgebungsbildes LP2 der Beleuchtungsbeitrag eines nur reflektierten Sehstrahls und anhand des diffusen Umgebungsbildes LP3 der Beleuchtungsbeitrag eines transmissiv gestreuten Sehstrahls ermittelt. Der Beleuchtungsbeitrag des jeweiligen Sehstrahls wird abhängig von einem Helligkeits- und/oder Farbwert am Auftreffpunkt des Sehstrahls auf das Umgebungsbild ermittelt.

In Figur 1 trifft der weiterverfolgte Sehstrahl R1 nicht auf das Objektvolumen OV, sondern als ungestreuter Sehstrahl auf das ungefilterte Umgebungsbild LP1. Dies gilt auch für den Sehstrahl R2, der zwar das Objektvolumen OV durchdringt, aber dort nicht gestreut wird und somit ebenfalls seinen Beleuchtungsbeitrag abhängig vom Helligkeits- oder Farbwert des Umgebungsbildes LP1 am Auftreffpunkt erhält.

Der Sehstrahl R3 wird im Objektvolumen OV zunächst an der zweiten Oberfläche IS2, dann an der ersten Oberfläche IS1 jeweils reflexiv gestreut und anschließend im Inneren des Objekts OBJ noch einmal transmissiv gestreut, bevor er das Objektvolumen OV verlässt. Aufgrund der transmissiven Streuung wird dem Sehstrahl R3 ein transmissiver Streutyp zugeordnet und abhängig davon das diffuse Umgebungsbild LP3 ausgewählt, um den Beleuchtungsbeitrag des Sehstrahls R3, abhängig vom Helligkeits- oder Farbwert am Auftreffpunkt des Umgebungsbildes LP3 zu ermitteln. Der Sehstrahl R4 wird innerhalb des Objekts OBJ an drei Streupositionen jeweils in zufallsbasierter Streurichtung transmissiv gestreut, bevor er das Objektvolumen OV verlässt. Aufgrund der transmissiven Streuung wird dem Sehstrahl R4 ein transmissiver Streutyp zugeordnet und entsprechend sein Beleuchtungsbeitrag anhand des diffusen Umgebungsbildes LP3 ermittelt.

Der Sehstrahl R5 wird innerhalb des Objektvolumens OV nur einmal, und zwar reflexiv, an der zweiten Oberfläche IS2 gestreut, bevor er das Objektvolumen OV verlässt. Aufgrund der reflexiven Streuung wird dem Sehstrahl R5 ein reflexiver Streutyp zugeordnet und sein Beleuchtungsbeitrag anhand des reflexiven Umgebungsbildes LP2, d.h. anhand eines Helligkeits- und/oder Farbwerts des Umgebungsbildes LP2 am Auftreffpunkt ermittelt.

Der Sehstrahl R6 wird im Inneren des Objekts OBJ an drei Streupositionen jeweils in zufallsbasierter Richtung transmissiv gestreut und wird danach innerhalb des Objektes OBJ, z.B. aufgrund einer hohen lokalen Dichte in der Nähe der letzten Streuposition, absorbiert. Insofern der Sehstrahl R6 nach allen Streuereignissen innerhalb des Objektvolumens OV verbleibt, erhält dieser Sehstrahl R6 keinen Beleuchtungsbeitrag, im Unterschied zu den Sehstrahlen R1,...,R5, die das Objektvolumen OV verlassen und einen Beleuchtungsbeitrag von einem Umgebungsbild LP1, LP2 oder LP3 erhalten. Der resultierende Beleuchtungsbeitrag bzw. die resultierende Farbe des jeweiligen Sehstrahls wird zu dem jeweils zugeordneten Visualisierungspixel des Detektors D addiert.

Zur Berechnung von Oberflächenschattierungseffekten für implizite Oberflächen, hier IS1 und IS2, innerhalb des Objektvolumens OV wird für eine jeweilige Streuposition eines Sehstrahls ein lokaler Gradient der Dichte an der Streuposition aus den Volumendaten interpoliert und abhängig vom Betrag des Gradienten ein probabilistisches Oberflächenstreuereignis modelliert. Ein solches Oberflächenstreuereignis kann eine reflexive Streuung, d.h. eine Reflexion des Sehstrahls, oder eine Brechung des Sehstrahls an der impliziten Oberfläche sein. Falls eine solche reflexive Streuung stattfindet, wird eine zufällige Streurichtung in der Hemisphäre der durch eine Richtung des lokalen Dichtegradienten gegebenen Oberflächennormale ausgewählt. Die Wahrscheinlichkeit für eine reflexive Streuung wird vorzugsweise anhand einer sogenannten BRDF (Bidirectional Reflectance Distribution Function) der für die Streuposition interpolierten Volumendaten bestimmt. Bei reflexiven Streuungen werden Streurichtungen entlang einer Reflexionsrichtung gemäß dem physikalischen Reflexionsgesetz in hohem Maße gegenüber anderen Richtungen der Hemisphäre bevorzugt. Der reflexiv gestreute Sehstrahl ist somit gewissermaßen probabilistisch in die durch das Reflexionsgesetz vorgegebene Reflexionsrichtung fokussiert. Einem Sehstrahl, der nur reflexiv gestreut wird, hier der Sehstrahl R5, wird ein reflexiver Streutyp zugeordnet. Wenn ein ausschließlich reflexiv gestreuter Sehstrahl das Objektvolumen OV verlässt, wird der Beleuchtungsbeitrag dieses Sehstrahls anhand des Helligkeits- und/oder Farbwerts des reflexiven Umgebungsbildes LP2 am Auftreffpunkt ermittelt. Wird ein jeweiliger Sehstrahl transmissiv gestreut, wird diesem, wie schon oben erwähnt, ein transmissiver Streutyp zugeordnet und sein Beleuchtungsbeitrag wird anhand des Umgebungsbildes LP3 ermittelt, falls er das Objektvolumen OV verlässt. In beiden Fällen wird der Beleuchtungsbeitrag mit der dem jeweiligen Sehstrahl zugeordneten Farbe kombiniert, z.B. multipliziert, und zum jeweils zugeordneten Visualisierungspixel addiert. Ein Sehstrahl, der das Objektvolumen OV nicht trifft, hier R1, oder nicht im Objektvolumen OV gestreut wird, hier R2, erhält einen Beleuchtungsbeitrag vom ungefilterten Umgebungsbild LP1.

Figur 2 veranschaulicht eine Variante der Erfindung, bei der zusätzliche Beiträge in den Beleuchtungsbeitrag eines jeweiligen Sehstrahls eingehen. Zu diesem Zweck werden Beleuchtungsstrahlen IR1,...,IR6 als zusätzliche Beiträge zum Beleuchtungsbeitrag des jeweiligen Sehstrahls simuliert. Die Beleuchtungsstrahlen IR1,...,IR6 werden für jede reflexive Streuposition innerhalb des Objektvolumens OV zusätzlich berechnet und sind in Figur 2 durch strichlierte Pfeile angedeutet.

In Figur 2 werden die Sehstrahlen R1,...,R5, wie schon in Zusammenhang mit Figur 1 erläutert, gestreut und erhalten entsprechende Beleuchtungsbeiträge. Zusätzlich zu diesen in Zusammenhang mit Figur 1 beschriebenen Beleuchtungsbeiträgen werden bei dem durch Figur 2 veranschaulichten Ausführungsbeispiel für jede reflexive Streuung, hier der Sehstrahlen R3 und R5, durch die Beleuchtungsstrahlen IR1,...,IR6 zusätzliche Beiträge zum Beleuchtungsbeitrag des jeweiligen Sehstrahls R3 bzw. R5 addiert. So werden z.B. für die reflexive Streuung des Sehstrahls R5 an der zweiten Oberfläche IS2 Beiträge der Beleuchtungsstrahlen IR3 und IR4 zum Beleuchtungsbeitrag des Sehstrahls R5 hinzugefügt. Der Beleuchtungsstrahl IR3, der einem diffusen Beleuchtungsbeitrag entspricht, läuft hierbei vom Umgebungsbild LP3 zur reflexiven Streuposition, während der Beleuchtungsstrahl IR4, der einem reflexiven Beleuchtungsbeitrag entspricht, vom Umgebungsbild LP2 zur reflexiven Streuposition verläuft. Als Ausgangspunkt des Beleuchtungsstrahls IR3 auf dem Umgebungsbild LP3 wird eine zufällige Position in der Hemisphäre der Oberfläche IS2 am Reflexionspunkt ausgewählt. Beim Beleuchtungsstrahl IR4 wird als Ausgangspunkt auf dem Umgebungsbild LP2 ein Punkt in Reflexionsrichtung ausgewählt. Anhand der Beiträge der Beleuchtungsstrahlen IR3 und IR4 zur reflexiven Streuposition kann deren zugeordneter Farbwert modifiziert werden. Hierbei kann der der reflexiven Streuposition ursprünglich zugeordnete Farbwert mit einem Helligkeits- und/oder Farbwert des diffusen Beleuchtungsstrahls IR3 gewichtet werden und es kann ein Helligkeits-und/oder Farbwert des reflexiven Beleuchtungsstrahls IR4 hinzuaddiert werden. Der resultierende Farbwert kann dann mit dem dem Sehstrahl R5 zugeordneten Farbwert kombiniert, z.B. multipliziert werden, um so den Farbwert des Sehstrahls R5 für nachfolgende Streuereignisse zu modifizieren. Das vorstehend für die Reflexion des Sehstrahls R5 an der zweiten Oberfläche IS2 beschriebene Beleuchtungsverfahren mit den Beleuchtungsstrahlen IR3 und IR4 wird auch bei den reflexiven Streuungen des Sehstrahls R3 an der zweiten Oberfläche IS2, hier mit den Beleuchtungsstrahlen IR1 und IR2, und an der ersten Oberfläche IS1, hier mit den Beleuchtungsstrahlen IR5 und IR6, durchgeführt.

Die Beleuchtungsstrahlen IR1,...,IR6 werden jeweils nicht gestreut und verzweigen nicht. Auf diese Weise können aufwändig zu berechnende kaskadierte Verzweigungen von Beleuchtungsstrahlen vermieden werden.

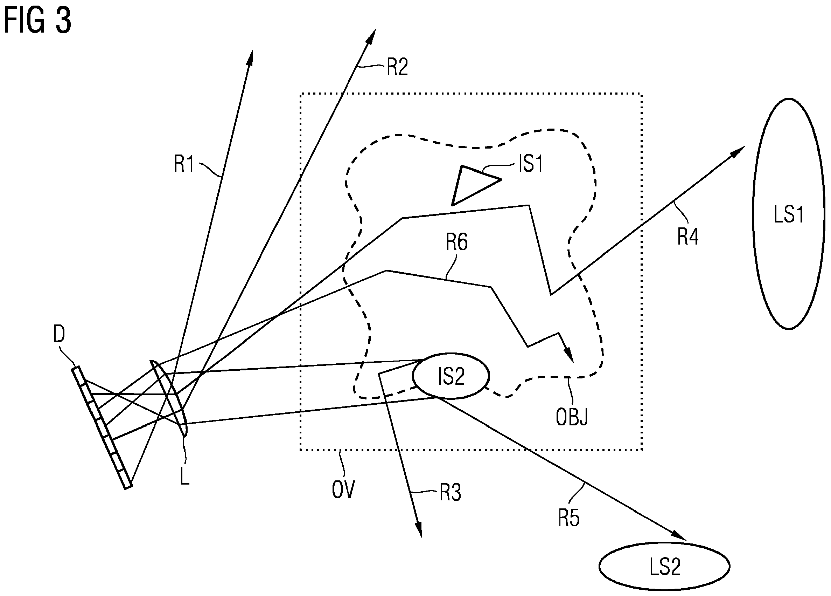

Figur 3 veranschaulicht eine weitere Variante der Erfindung, bei der anstelle von Umgebungsbildern flächenhafte Lichtquellen LS1 und LS2 als Beleuchtungsquellen fungieren. Bei diesem Ausführungsbeispiel werden die Streupositionen bestimmt wie bereits in Zusammenhang mit den vorhergehenden Ausführungsbeispielen beschrieben. Bei dem durch Figur 3 veranschaulichten Ausführungsbeispiel wird jedoch im Unterschied zu den durch die Figuren 1 und 2 veranschaulichten Ausführungsbeispielen die Auswahl der Streurichtung auf Streurichtungen in Richtung auf die Lichtquellen LS1 und LS2 beschränkt, d.h. für jede Streuposition wird zunächst eine der Lichtquellen LS1 oder LS2, gegebenenfalls gewichtet mit ihrer Fläche, zufällig ausgewählt und anschließend eine Zufallsposition auf der Fläche der ausgewählten Lichtquelle bestimmt. Die Streuung erfolgt dann in Richtung der bestimmten Zufallsposition.

Da die Lichtquellen LS1 und LS2 nicht das Objektvolumen OV umschließen, kann durch die Beschränkung der Auswahl der Streurichtung vermieden werden, dass ein erheblicher Teil der Sehstrahlen keine Lichtquelle trifft und deshalb gewissermaßen verschwendet wäre. In dem durch Figur 3 veranschaulichten Ausführungsbeispiel werden die Sehstrahlen R1 und R2 nicht im Objektvolumen gestreut und treffen auch keine der Lichtquellen LS1 und LS2. Dementsprechend erhalten sie keinen Beleuchtungsbeitrag. Der Sehstrahl R5 wird an der zweiten Oberfläche IS2 reflektiert und trifft die Lichtquelle LS2, deren Helligkeits- und/oder Farbwert zum Beleuchtungsbeitrag des Sehstrahls R5 addiert wird. Der Sehstrahl R6 wird innerhalb des Objektes OBJ viermal transmissiv gestreut, wobei die Streurichtung jedes Mal in Richtung einer der Lichtquellen LS1 oder LS2 zeigt. Nach der vierten Streuung wird der Sehstrahl R6 im Objekt OBJ absorbiert und liefert keinen Beleuchtungsbeitrag zum zugeordneten Visualisierungspixel des Detektors D. Der Sehstrahl R4 wird innerhalb des Objekts OBJ dreimal jeweils in Richtung einer der Lichtquellen LS1 und LS2 gestreut und verlässt schließlich das Objektvolumen OV in Richtung der Lichtquelle LS1, deren Helligkeits- und/oder Farbwert zum Beleuchtungsbeitrag des Sehstrahls R4 hinzuaddiert wird.

Würden die Streurichtungen ausnahmslos bei jeder Streuung wie beschrieben eingeschränkt, so könnten nicht alle möglichen Lichtpfade durch das Objektvolumen OV berücksichtigt werden. Dies hätte zur Folge, dass Bereiche innerhalb des Objektvolumens OV unbeleuchtet sein könnten und somit auf dem visualisierten Bild vollständig schwarz erschienen. Zur Vermeidung derartiger unbeleuchteter Bereiche können auch nicht eingeschränkte Streuungen mit einer vorgegebenen Wahrscheinlichkeit zur Auswahl zugelassen werden. D.h. unterhalb einer z.B. vom Benutzer vorgebbaren Wahrscheinlichkeitsschwelle kann anstelle einer Streuung in Richtung auf die Lichtquellen LS1 oder LS2 auch eine Streuung in beliebiger, vorzugsweise statistisch gleich verteilter Richtung zugelassen werden. Einem solchen nicht eingeschränkt gestreuten Sehstrahl kann vorzugsweise ein spezifischer Streutyp, wie z.B. "Ambient Lighting" zugeordnet werden.

Dementsprechend wird in Figur 3 der Sehstrahl R3 zunächst an der zweiten Oberfläche IS2 in eine nicht eingeschränkte Zufallsrichtung gestreut und anschließend innerhalb des Objekts OBJ nochmals in eine nicht eingeschränkte Zufallsrichtung gestreut. Dem Sehstrahl R3 wird entsprechend der Streutyp "Ambient Lighting" zugeordnet. Der Sehstrahl R3 tritt aus dem Objektvolumen OV aus und trifft auf keine der Lichtquellen LS1 oder LS2. Als ein dem Streutyp "Ambient Lighting" zugeordneter Sehstrahl erhält R3 jedoch einen schwachen diffusen und isotropen Umgebungslichtbeitrag, der häufig auch als "Ambient Occlusion Lighting" bezeichnet wird. Auf diese Weise können vollständig unbeleuchtete Bereiche des Objekts OBJ effektiv vermieden werden.

Die Visualisierungspixel des Detektors D bilden einen Visualisierungsbildpuffer, der die statistisch gemittelten Beleuchtungsbeiträge aller Sehstrahlen enthält. Dieser Visualisierungsbildpuffer wird in kontinuierlicher Weise dem Benutzer präsentiert und fortlaufend durch Berechnung weiterer Sehstrahlen im Hintergrund verfeinert. Im Fall von Hochkontrastbildern, so genannten "High Dynamic Range Images" (HDRI), kann eine Dynamikkompression durchgeführt werden, bevor das Visualisierungsbild dem Benutzer präsentiert wird. Wenn sich Visualisierungsparameter, wie z.B. eine Position der virtuellen Kamera ändern, kann der Visualisierungsbildpuffer gelöscht werden, und die Berechnung von Sehstrahlen neu gestartet werden. Da die Sehstrahlen und die Beleuchtungsbeiträge unabhängig voneinander berechnet werden können, lässt sich das erfindungsgemäße Visualisierungsverfahren gut parallelisieren und damit effektiv auf einer Vielkern-Architektur oder auf einer massiv parallel arbeitenden Grafikkarte ausführen.

Durch die Verwendung eines Monte-Carlo-Verfahrens zur Farbverfolgung kann die Erfindung beliebige Lichtpfade durch das Objektvolumen OV berücksichtigen und komplexe Beleuchtungseffekte und Kameramodelle nachbilden. Aufgrund einer stochastischen Natur des Verfahrens kann eine große Vielzahl auch komplexer Lichtpfade innerhalb des Objektvolumens OV berücksichtigt werden, um mit der Zeit ein glattes, photorealistisches Visualisierungsbild zu erzeugen. Das Verfahren ist sehr effizient, da für einen jeweiligen Sehstrahl nur ein einziger Pfad durch das Objektvolumen OV mittels Woodcock-Tracking verfolgt werden muss.

## Patentansprüche

1. Verfahren zur Visualisierung eines durch Volumendaten repräsentierten, inhomogenen dreidimensionalen Objekts (OBJ), wobei
a) die Volumendaten eine Dichte des abzubildenden Objekts (OBJ) in einem Objektvolumen (OV) angeben,
b) für ein jeweiliges Visualisierungspixel eine Vielzahl von dem Visualisierungspixel zugeordneten Sehstrahlen (R1,...,R6) simuliert werden, wobei für einen jeweiligen Sehstrahl (R1,...,R6), der in das Objektvolumen (OV) eindringt
i) abhängig von der Dichte entlang des Sehstrahls (R1,...,R6) eine Streuposition bestimmt wird,
ii) eine Streurichtung abhängig von einem Zufallsprozess ausgewählt wird,
iii) der Sehstrahl (R1,...,R6) an der Streuposition in die ausgewählte Streurichtung gestreut wird, und
iv) die Schritte i) bis iii) wiederholt werden, bis der Sehstrahl (R1,...,R6) im Objektvolumen (OV) absorbiert wird oder
aus dem Objektvolumen (OV) austritt, wobei der austretende Sehstrahl auf eine Beleuchtungsquelle (LP1,...,LP3, LS1, LS2) trifft und abhängig von einem Helligkeits- und/oder Farbwert der Beleuchtungsquelle (LP1,...,LP3, LS1, LS2) ein Beleuchtungsbeitrag des Sehstrahls (R1,...,R6) zum jeweiligen Visualisierungspixel ermittelt wird, wobei
- mehrere das Objektvolumen (OV) umgebende Umgebungsbilder (LP1,...,LP3) als Beleuchtungsquellen vorgesehen sind,
- dem Sehstrahl (R1,...,R6) ein Streutyp zugeordnet wird,
- abhängig vom Streutyp des austretenden Sehstrahls mindestens eines der Umgebungsbilder (LP1,...,LP3) ausgewählt wird,
- ein Auftreffpunkt des austretenden Sehstrahls auf das Umgebungsbild ermittelt wird,
- der Beleuchtungsbeitrag des Sehstrahls (R1,...,R6) abhängig von einem Helligkeits- und/oder Farbwert am Auftreffpunkt spezifisch anhand des mindestens einen ausgewählten Umgebungsbildes (LP1,...,LP3) ermittelt wird, und
c) über die jeweiligen Beleuchtungsbeiträge der Vielzahl von Sehstrahlen (R1,...,R6) statistisch gemittelt wird, um einen Helligkeits- und/oder Farbwert für das zugeordnete Visualisierungspixel zu ermitteln.

2. Verfahren nach Anspruch 1, **dadurch gekennzeichnet,**
**dass** aus einem ersten der Umgebungsbilder (LP1) mindestens ein zweites der Umgebungsbilder (LP2, LP3) durch eine für einen Streutyp spezifische Filterung erzeugt wird.

3. Verfahren nach einem der vorhergehenden Ansprüche, **dadurch gekennzeichnet,**
**dass** der Beleuchtungsbeitrag des Sehstrahls (R1,...,R6) abhängig von einem Helligkeits- und/oder Farbwert eines ungestreut von einer Beleuchtungsquelle (LP1,...,LP3, LS1, LS2) zur Streuposition verlaufenden Beleuchtungsstrahls (IR1,IR6) modifiziert wird.

4. Verfahren nach einem der vorhergehenden Ansprüche, **dadurch gekennzeichnet,**
**dass** mindestens eine Lichtquelle (LS1, LS2) als Beleuchtungsquelle vorgesehen ist, und
**dass** die Auswahl der Streurichtung auf Streurichtungen in Richtung auf die mindestens eine Lichtquelle (LS1, LS2) beschränkt wird.

5. Verfahren nach Anspruch 4, **dadurch gekennzeichnet,**
**dass** die Beschränkung der Streurichtung mit einer vorgegebenen Wahrscheinlichkeit erfolgt, und
**dass**, falls die Beschränkung nicht erfolgt, ein diffuser Beleuchtungsbeitrag in den Beleuchtungsbeitrag des austretenden Sehstrahls eingeht.

6. Verfahren nach einem der vorhergehenden Ansprüche, **dadurch gekennzeichnet,**
**dass** der Beleuchtungsbeitrag des Sehstrahls (R1,...,R6) durch die Dichte an der Streuposition beeinflusst wird.

7. Verfahren nach einem der vorhergehenden Ansprüche, **dadurch gekennzeichnet,**
**dass** eine Transferfunktion vorgesehen ist, die einen jeweiligen Wert der Dichte auf einen Helligkeits-, Farb-, Transparenz- und/oder Opazitätswert abbildet.

8. Verfahren nach einem der vorhergehenden Ansprüche, **dadurch gekennzeichnet,**
**dass** ein Gradient der Dichte an der Streuposition ermittelt wird, und
**dass** die Streurichtung abhängig vom Gradienten ausgewählt wird.

9. Verfahren nach Anspruch 8, **dadurch gekennzeichnet,**
**dass** ein Betrag des Gradienten bestimmt wird, und
**dass** mit einer vom Betrag des Gradienten abhängigen Wahrscheinlichkeit
dem Sehstrahl (R1,...,R6) ein reflektiver und/oder refraktiver Streutyp zugeordnet wird,
eine Richtung des Gradienten als Oberflächennormale bestimmt wird, und
bei der Auswahl der Streurichtung bezüglich der Oberflächennormale reflektierte und/oder gebrochene Streurichtungen bevorzugt werden.

10. Verfahren nach einem der vorhergehenden Ansprüche, **dadurch gekennzeichnet,**
**dass** die Streuposition mittels Woodcock-Tracking ermittelt wird.

11. Verfahren nach einem der vorhergehenden Ansprüche, **dadurch gekennzeichnet,**
**dass** eine Anzahl der erfolgten Streuungen des Sehstrahls (R1,...,R6) ermittelt wird, und
**dass** die Absorption des Sehstrahls (R1,...,R6) im Objektvolumen (OV) abhängig von dieser Anzahl erfolgt.

12. Verfahren nach einem der vorhergehenden Ansprüche, **dadurch gekennzeichnet,**
**dass** ein jeweiliger einem Visualisierungspixel zugeordneter Sehstrahl (R1,...,R6) vom Visualisierungspixel auf eine zufällig ausgewählte Position auf einer virtuellen Linse (L) gerichtet wird,
**dass** der Sehstrahl (R1,...,R6) an der ausgewählten Position gemäß einer Brechkraft der virtuellen Linse (L) gebrochen wird, und
**dass** der gebrochene Sehstrahl weiterverfolgt wird.

13. Visualisierungsvorrichtung zur Visualisierung eines durch Volumendaten repräsentierten, inhomogenen dreidimensionalen Objekts (OBJ) mit allen Mitteln zum Ausführen eines Verfahrens nach einem der vorhergehenden Ansprüche.

14. Computerprogrammprodukt zur Visualisierung eines durch Volumendaten repräsentierten, inhomogenen dreidimensionalen Objekts (OBJ) eingerichtet zum Ausführen eines Verfahrens nach einem der Ansprüche 1 bis 12.

## Claims

1. Method for visualizing an inhomogeneous three-dimensional object (OBJ), which is represented by volume data, wherein
a) the volume data indicates a density of the object (OBJ) to be imaged in an object volume (OV),
b) for a respective visualization pixel, a large number of visual rays (R1,...,R6) which are associated with the visualization pixel are simulated, wherein, for a respective visual ray (R1,...,R6) which enters the object volume (OV),
i) a scatter position is determined in dependence on the density along the visual ray (R1,...,R6),
ii) a scatter direction is selected in dependence on a random process,
iii) the visual ray (R1,...,R6) is scattered at the scatter position in the selected scatter direction, and
iv) steps i) to iii) are repeated until the visual ray (R1,...,R6) is absorbed in the object volume (OV) or
exits the object volume (OV), wherein the exiting visual ray is incident on an illumination source (LP1,...,LP3, LS1, LS2) and, in dependence on a brightness and/or color value of the illumination source (LP1,...,LP3, LS1, LS2), an illumination contribution of the visual ray (R1,...,R6) to the respective visualization pixel is ascertained, wherein
- a plurality of environment images (LP1,...,LP3) surrounding the object volume (OV) are provided as illumination sources,
- a scatter type is associated with the visual ray (R1,...,R6),
- at least one of the environment images (LP1,...,LP3) is selected in dependence on the scatter type of the exiting visual ray,
- a point of incidence of the exiting visual ray on the environment image is ascertained,
- the illumination contribution of the visual ray (R1,...,R6) is ascertained, in dependence on a brightness and/or color value at the point of incidence, specifically on the basis of the at least one selected environment image (LP1,...,LP3), and
c) a statistical average is taken over the respective illumination contributions of the large number of visual rays (R1,...,R6) in order to ascertain a brightness and/or color value for the associated visualization pixel.

2. Method according to Claim 1, **characterized in that** at least a second one of the environment images (LP2, LP3) is produced from a first one of the environment images (LP1) by way of filtering that is specific for a scatter type.

3. Method according to one of the preceding claims, **characterized**
**in that** the illumination contribution of the visual ray (R1,...,R6) is modified in dependence on a brightness and/or color value of an illumination ray (IR1,...,IR6) which travels, without scattering, from an illumination source (LP1,...,LP3, LS1, LS2) to the scatter position.

4. Method according to one of the preceding claims, **characterized**
**in that** at least one light source (LS1, LS2) is provided as the illumination source, and
**in that** the selection of the scatter direction is limited to scatter directions in the direction of the at least one light source (LS1, LS2).

5. Method according to Claim 4, **characterized in that** the limitation of the scatter direction is effected using a specified probability, and
**in that**, if no limitation is given, a diffuse illumination contribution is incorporated in the illumination contribution of the exiting visual ray.

6. Method according to one of the preceding claims, **characterized**
**in that** the illumination contribution of the visual ray (R1,...,R6) is influenced by the density at the scatter position.

7. Method according to one of the preceding claims, **characterized**
**in that** a transfer function is provided, which images a respective value of the density onto a brightness value, color value, transparency value and/or opacity value.

8. Method according to one of the preceding claims, **characterized**
**in that** a gradient of the density at the scatter position is ascertained, and
**in that** the scatter direction is selected in dependence on the gradient.

9. Method according to Claim 8, **characterized in that** an absolute value of the gradient is determined, and **in that** a reflective and/or refractive scatter type is associated with the visual ray (R1,...,R6) with a probability that is dependent on the absolute value of the gradient,
a direction of the gradient is determined as the surface normal, and
when selecting the scatter direction, scatter directions which are reflected and/or refracted with respect to the surface normal are preferred.

10. Method according to one of the preceding claims, **characterized**
**in that** the scatter position is ascertained using Woodcock tracking.

11. Method according to one of the preceding claims, **characterized**
**in that** a number of the scatterings of the visual ray (R1,...,R6) is ascertained, and
**in that** the absorption of the visual ray (R1,...,R6) in the object volume (OV) takes place in dependence on this number.

12. Method according to one of the preceding claims, **characterized**
**in that** a respective visual ray (R1,...,R6) which is associated with a visualization pixel is directed from the visualization pixel onto a randomly selected position on a virtual lens (L), in that the visual ray (R1,...,R6) is refracted at the selected position according to a refractive index of the virtual lens (L), and
**in that** the refracted visual ray is traced further.

13. Visualization apparatus for visualizing an inhomogeneous three-dimensional object (OBJ), which is represented by volume data, having all the means for performing a method according to one of the preceding claims.

14. Computer program product for visualizing an inhomogeneous three-dimensional object (OBJ), which is represented by volume data, set up for performing a method according to one of Claims 1 to 12.

## Revendications

1. Procédé de visualisation d'un objet (OBJ) tridimensionnel, non homogène et représenté par des données de volume, dans lequel
a) les données de volume indiquent une masse volumique de l'objet (OBJ) à reproduire dans un volume (OV) d'objet,
b) pour un pixel de visualisation respectif, on simule une pluralité de rayons (R1, ..., R6) visuels affectés au pixel de visualisation, dans lequel, pour un rayon (R1, ..., R6) visuel respectif, qui pénètre dans le volume (OV) d'objet,
i) on détermine une position de dispersion en fonction de la masse volumique le long du rayon (R1, ..., R6) visuel,
ii) on choisit une direction de dispersion en fonction d'un processus aléatoire,
iii) on disperse le rayon (R1, ..., R6) visuel en la position de dispersion dans la direction de dispersion choisie,
iv) on répète les stades i) à iii) jusqu'à ce que le rayon (R1, ..., R6) visuel soit absorbé dans le volume (OV) de l'objet ou
sorte du volume (OV) de l'objet, dans lequel le rayon visuel sortant arrive sur une source (LP1, ..., LP3, LS1, LS2) d'éclairage et, en fonction d'une valeur de la luminosité et/ou d'une valeur de couleur de la source (LP1, ..., LP3, LS1, LS2) d'éclairage, on détermine une contribution à l'éclairage du rayon (R1, ..., R6) visuel pour le pixel de visualisation respectif, dans lequel
- plusieurs images (LP1, ..., LP3) d'ambiance, entourant le volume (OV) de l'objet, sont prévues comme sources d'éclairage,
- un type de dispersion est affecté au rayon (R1, ..., R6) visuel,
- en fonction du type de dispersion du rayon visuel sortant, on choisit au moins l'une des images (LP1, ..., LP3) d'ambiance,
- on détermine un point d'arrivée du rayon visuel sortant sur l'image ambiante,
- on détermine la contribution à l'éclairage du rayon (R1, ..., R6) visuel en fonction d'une valeur de luminosité et/ou d'une valeur de couleur au point d'incidence, spécifiquement à l'aide de la au moins une image (LP1, ..., LP3) d'ambiance choisie et
c) on fait la moyenne statistiquement des contributions à l'éclairage respectives de la pluralité de rayons (R1, ..., R6) visuels pour déterminer une valeur de luminosité et/ou une valeur de couleur pour le pixel de visualisation associé.

2. Procédé suivant la revendication 1, **caractérisé en ce qu'** à partir d'une première des images (LP1) ambiantes, on produit au moins une deuxième des images (LP2, LP3) ambiantes par un filtrage spécifique à un type de dispersion.

3. Procédé suivant l'une des revendications précédentes, **caractérisé en ce que**
l'on modifie la contribution à l'éclairage du rayon (R1, ..., R6) visuel en fonction d'une valeur de luminosité et/ou d'une valeur de couleur d'un rayon (IR1, ..., IR6) d'éclairage s'étendant non dispersée d'une source (LP1, ..., LP3, LS1, LS2) d'éclairage à la position de dispersion.

4. Procédé suivant l'une des revendications précédentes, **caractérisé en ce qu'**
il est prévu au moins une source (LS1, LS2) lumineuse comme source d'éclairage et
**en ce que** l'on limite le choix de la direction de dispersion à des directions de dispersion en direction de la au moins une source (LS1, LS2) lumineuse.

5. Procédé suivant la revendication 4, **caractérisé en ce que** la limitation de la direction de dispersion s'effectue avec une probabilité donnée à l'avance et
**en ce que**, dans le cas où la limitation n'est pas effectuée, une contribution d'éclairage par diffusion entre dans la contribution à l'éclairage du rayon visuel sortant.

6. Procédé suivant l'une des revendications précédentes, **caractérisé en ce que**
l'on influence la contribution à l'éclairage du rayon (R1, ..., R6) visuel par la masse volumique à la position de dispersion.

7. Procédé suivant l'une des revendications précédentes, **caractérisé en ce qu'**
il est prévu une fonction de transfert, qui reproduit une valeur respective de la masse volumique en une valeur de luminosité, de couleur, de transparence et/ou d'opacité.

8. Procédé suivant l'une des revendications précédentes, **caractérisé en ce que**
l'on détermine un gradient de la masse volumique en la position de dispersion et
**en ce que** l'on choisit la direction de dispersion en fonction du gradient.

9. Procédé suivant la revendication 8, **caractérisé en ce que** l'on détermine une valeur absolue du gradient et **en ce que**, par une probabilité, qui dépend de la valeur absolue du gradient, on associe au rayon (R1, ..., R6) visuel un type de dispersion par réflexion et/ou par réfraction,
on détermine une direction du gradient comme normale à une surface et
dans le choix de la direction de dispersion, on préfère des directions de dispersion réfléchies et/ou réfractées par rapport à la normale à la surface.

10. Procédé suivant l'une des revendications précédentes, **caractérisé en ce que**
l'on détermine la position des dispersions au moyen de woodcock-tracking.

11. Procédé suivant l'une des revendications précédentes, **caractérisé en ce que**
l'on détermine un nombre de dispersions effectuées du rayon (R1, ..., R6) visuel et
**en ce que** l'absorption du rayon (R1, ..., R6) visuel, dans le volume (OV) de l'objet, s'effectue en fonction de ce nombre.

12. Procédé suivant l'une des revendications précédentes, **caractérisé en ce que**
l'on dirige un rayon (R1, ..., R6) visuel respectif associé à un pixel de visualisation, du pixel de visualisation à une position choisie aléatoirement sur une lentille (L) virtuelle,
**en ce que** l'on réfracte le rayon (R1, ..., R6) visuel en la position choisie, suivant le pouvoir réfringent de la lentille (L) virtuelle et
on continue à suivre le rayon visuel réfracté.

13. Installation de visualisation pour visualiser un objet (OBJ) tridimensionnel non homogène et représenté par des données de volume, comprenant tous les moyens pour réaliser un procédé suivant l'une des revendications précédentes.

14. Produit de programme d'ordinateur pour visualiser un objet (OBJ) tridimensionnel non homogène et représenté par des données de volume, conçu pour réaliser un procédé suivant l'une des revendications pour réaliser un procédé suivant l'une des revendications 1 à 12.
